# EUROPÄISCHE PATENTANMELDUNG

(11) **EP 1 791 118 A1**
(43) Veröffentlichungstag der Anmeldung: **30.05.2007**
(21) Anmeldenummer: 05111327.2
(22) Anmeldetag: 25.11.2005
(51) Int. Cl.: G11B 7/09

(54) **Aktuator für eine Abtasteinrichtung zur Abtastung optischer Platten**

(71) Anmelder: DEUTSCHE THOMSON-BRANDT GMBH, 78048 Villingen-Schwenningen (DE)
(72) Erfinder: Suzuki, Tsuneo, 78087 Mönchweiler (DE); Bammert, Michael, 78739 Hardt (DE); Dupper, Rolf, 78050 Villingen-Schwenningen (DE)
(74) Vertreter: Rossmanith, Manfred

(57) **Zusammenfassung**

Die Erfindung betrifft einen Aktuator (1) für eine Abtasteinrichtung zur Abtastung optischer Platten, der eine in einem Linsenhalter (3) festgelegte Fokuslinse (4) und eine mit einem Träger (6) fest verbundene Dämpferbasis (5) aufweist. Der Aktuator (1) ist mit einer am Träger (6) angeordneten Spulen- und Magnetanordnung (7) für eine Feinpositionierung der Fokuslinse (4) ausgerüstet, wobei ein Rahmen (8) mit auf beiden Seiten dieser Anordnung und einer Längsachse (L) des Aktuators angeordneten elastisch biegsamen Aufhängemitteln (11) mit der Dämpferbasis (5) verbunden ist. Sie löst die Aufgabe, einen derartigen Aktuator so zu gestalten, dass dieser auch für kleine optische Platten geeignet ist. Dazu ist der Linsenhalter (3) im Abstand von der Längsachse (L) und dabei auf der dieser (L) abgewandten und einer Aufnahme für die optischen Platten (2) zugewandten Seite des Aktuators (1) angeordnet, wobei die Bewegungsrichtung (B) der Abtasteinrichtung mit dem Aktuator (1) quer zur Längsachse (L) und radial zur Platte (2) liegt.

## Beschreibung

Die Erfindung betrifft einen Aktuator für eine Abtasteinrichtung zur Abtastung optischer Platten, insbesondere für ein Gerät zur Aufzeichnung und/ oder Wiedergabe von Informationen.

Ein in einer Abtasteinrichtung integrierter Aktuator dient der Emission eines Laserstrahls auf eine als Informationsträger ausgebildete optische Platte und dem Empfang des von der Platte reflektierten Strahls. Dazu weist der Aktuator eine Fokuslinse auf und ist mit einem Träger an einem auch als Pick up bekannten und an Führungsstangen verfahrbaren optischen Gehäuse verstellbar befestigt, um die Fokuslinse nach dem optischen Pfad des Gehäuses ausrichten zu können. Dieses Gehäuse und damit die gesamte Abtasteinrichtung ist mit hoher Geschwindigkeit und Positioniergenauigkeit, elektromotorisch angetrieben, bewegbar und stellt kurze Zugriffszeiten auf unterschiedliche Orte des Informationsträgers sicher. Dabei fokussiert die Abtasteinrichtung ein Strahlungsbündel zum Bilden eines Strahlungspunktes auf einer abzutastenden Spur auf dem Informationsträger. Dieser Strahlungspunkt folgt der Spur des sich drehenden Informationsträgers beim Aufzeichnen oder Wiedergeben. Dies geschieht mit Hilfe eines Spursteuersystems, das eine grobe Steuerung des schlittenartigen Gehäuses und des Aktuators in einer radialen Richtung der Platte und eine feine Steuerung des Aktuators ermöglicht. Der Aktuator ist vorzugsweise mit einer Trägerplatte am optischen Gehäuse befestigt und weist einen Linsenhalter für die Fokuslinse, eine mit der Trägerplatte starr verbundene Dämpferbasis für den Linsenhalter sowie Fokus- und Spurführungsspulen auf, wobei der Linsenhalter mit Hilfe von elastisch biegsamen Aufhängemitteln, insbesondere auch Drähten, elastisch federnd mit der Dämpferbasis verbunden ist.

Üblicherweise ist, wie in der EP 1 394 783 A2 offenbart, der Aktuator in der Bewegungsrichtung des optischen Gehäuses symmetrisch aufgebaut. Dabei ist der Linsenhalter auf der der Dämpferbasis abgewandten Seite einer die Fokus- und Spurführungs- sowie auch Neigungsspulen umfassenden und zwischen Magneten positionierten Spulenanordnung angeordnet, die mit ihrem Zentrum vorzugsweise im Schwerpunktes des Aktuators liegt, wobei auf beiden Seiten der durch den Linsenhalter und die Dämpferbasis bestimmten Längsachse, die zugleich Symmetrieachse ist, elastisch biegsame Aufhängedrähte für den Linsenhalter angeordnet sind. Der Linsenhalter befindet sich somit am vorderen Ende des Aktuators und wird entlang der Längs- und Symmetrieachse in bezogen auf die optische Platte radialer Richtung auf diese zu und von dieser weg bewegt.

Im Unterschied dazu ist in der EP 0 618 570 B1 eine Anordnung beschrieben, bei der ein grundsätzlich in gleicher Weise aufgebauter Aktuator mit dem optischen Gehäuse quer zu seiner Längsachse, und dabei ebenfalls radial zur optischen Platte bewegt wird.

Bei diesen Linsenhalteranordnungen in der Aktuatormitte wird es als nachteilig angesehen, dass der Aktuator und insbesondere die Linse nicht nahe genug an das Zentrum der jeweiligen optischen Platte herangefahren werden kann, was für das Abtasten kleiner Platten, etwa münzgroßer Scheiben (coin disk oder coin size disk) mit einem Durchmesser in der Größenordnung von 30 mm, unabdingbar ist.

Es ist Aufgabe der Erfindung, einen Aktuator so zu gestalten, dass er auch für kleine optische Platten geeignet ist.

Diese Aufgabe wird erfindungsgemäß dadurch gelöst, dass der Linsenhalter im Abstand von der Längsachse und dabei auf der dieser abgewandten und einer Aufnahme für die optischen Platten zugewandten Seite des Aktuators angeordnet ist. Vorteilhafte Ausgestaltungen sind in den Unteransprüchen aufgeführt.

Die Erfindung besteht darin, dass bei einem Aktuator für eine Einrichtung zum Abtasten optischer Platten, mit einem Linsenhalter der auf beiden Seiten dieser Anordnung und der Längsachse des Aktuators mit elastisch biegsamen Aufhängemitteln mit einer Dämpferbasis verbunden ist, der Linsenhalter im Abstand von der Längsachse und dabei auf der der Mitte der optischen Platte zugewandten Seite der Aufhängemittel angeordnet ist. Diese asymmetrische Anordnung des Linsenhalters außerhalb der Aktuatoraufhängung ermöglicht es, eine in dem Linsenhalter gehaltene Fokuslinse sehr nahe an das Zentrum auch einer kleinen optischen Platte heranzufahren, so dass auch der innere Bereich der Informationsspur dieser Platte mit dem fokussierten Laserstrahl abgetastet werden kann.

Damit der Schwerpunkt des Aktuators weiterhin im Zentrum der Spulen- und Magnetanordnung und dabei auf dessen Längsachse liegt, um eine Feineinstellung der Fokuslinse zu erleichtern, ist der Linsenhalter mit der Fokuslinse im seitlichen Abstand vom auf der Längsachse gegebenen Zentrum angeordnet und auf der anderen Seite der Längsachse und des Zentrums mit einer Ausgleichsmasse verbunden.

Dabei ist es zweckmäßig, den Linsenhalter und die Ausgleichsmasse an einem die Spulen- und Magnetanordnung umschließenden Rahmen anzuordnen und mit diesem als ein einstückiges Bauteil zu realisieren. Damit wird die Bauteilevielfalt reduziert, und es werden Montagekosten gesenkt. Mit diesem Rahmen können die elastischen Aufhängemittel, insbesondere Drähte, für den Linsenhalter verbunden sein.

Der Aktuator ist auf dem optischen Gehäuse der Abtasteinrichtung bevorzugt so angeordnet, dass die Abtasteinrichtung, radial zur optischen Platte und quer zur Längsachse des Aktuators bewegt wird.

Die Erfindung wird nachstehend anhand eines Ausführungsbeispiels erläutert. In den zugehörigen Zeichnungen zeigen:
- Fig. 1: eine Draufsicht auf einen erfindungsgemäßen Aktuator,
- Fig. 2: eine perspektivische Darstellung des Aktuators von Fig. 1 und
- Fig. 3: eine weitere perspektivische Darstellung des Aktuators von Fig. 1.

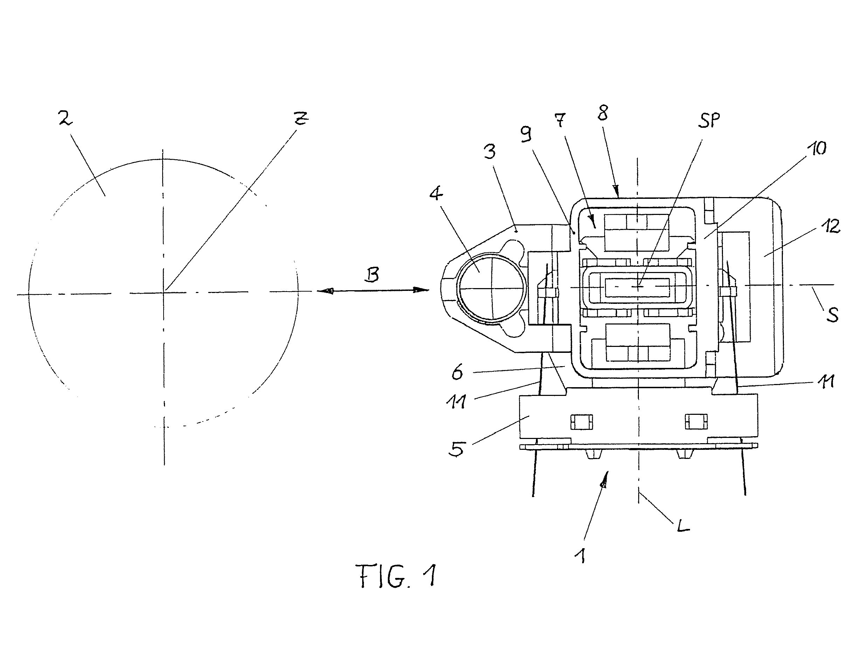

Der in Fig. 1 dargestellte Aktuator 1 als Bestandteil einer nicht weiter dargestellten Abtasteinrichtung zur Abtastung einer optischen Platte 2 weist eine in einem Linsenhalter 3 gehaltene Fokuslinse 4 und eine Dämpferbasis 5 für den Linsenhalter 3 auf. Die Dämpferbasis 5 ist mit einer Trägerplatte 6 zur Anordnung des Aktuators 1 an dem optischen Gehäuse der Abtasteinrichtung versehen und trägt auf der dem optischen Gehäuse abgewandten Seite in bekannter Weise eine Spulen- und Magnetanordnung 7, die Fokus-, Spurführungs- und Neigungsspulen umfasst, um eine Feinpositionierung der Fokuslinse 4 in allen Richtungen durchführen zu können. Diese Spulen- und Magnetanordnung 7 ist von einem symmetrisch zu dieser angeordneten Rahmen 8 umschlossen, der an seinen beiden parallel zur mittig angeordneten Längsachse L des Aktuators 1 verlaufenden Seitenwänden 9 und 10 außen jeweils mit zwei elastisch biegsamen Aufhängedrähten 11 mit der Dämpferbasis 5 verbunden ist.

An dem Rahmen 8 sind an der Außenseite der Seitenwand 9 der Linsenhalter 3 und an der Außenseite der Seitenwand 10 eine Ausgleichsmasse 12 in einem Stück angeformt und dabei zu einer quer zur Längsachse L verlaufenden Symmetrieachse S jeweils symmetrisch ausgebildet. Die Symmetrieachse S schneidet die Längsachse L des Aktuators 1 in dessen Massenmittelpunkt bzw. Schwerpunkt SP. Der Linsenhalter 3 mit der Fokuslinse 4 ist dabei auf der der Aufnahmeeinrichtung für die Platte 2 zugewandten Seite und damit plattenseitig am Aktuator 1 angeordnet und wird zur Positionierung über bzw. im senkrechten Abstand zur Informationsspur entlang der Symmetrieachse S und somit quer zur Längsachse L in radialer Richtung auf die Platte 2 zu und entsprechend auch wieder von dieser weg bewegt (Richtungspfeil B).

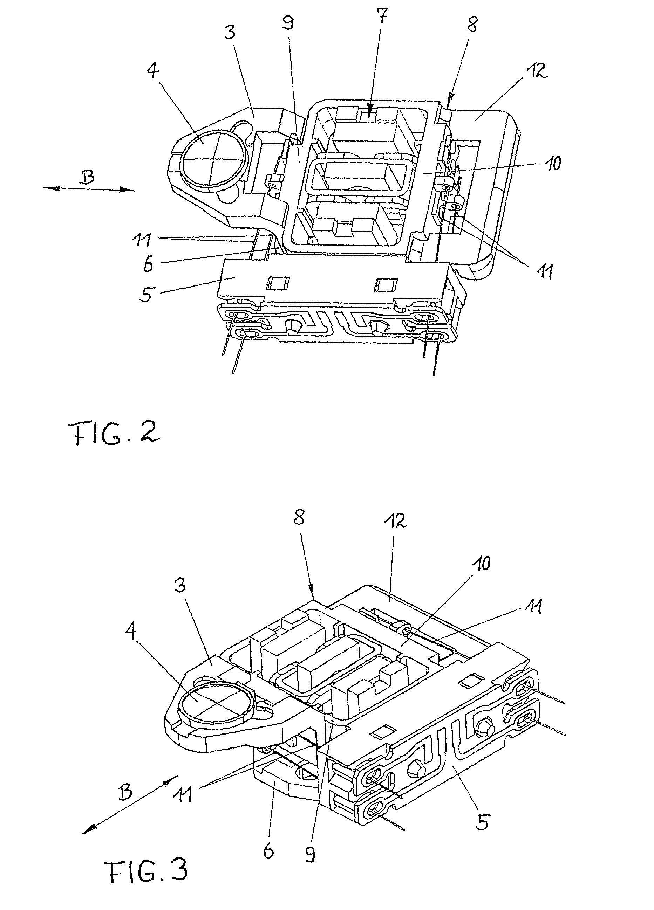

In den Fig. 2 und 3 ist der Aktuator 1 in zwei perspektivischen Darstellungen gezeigt. Diese sollen die Gestaltung desselben und die Anordnung der Fokuslinse 4 und der Ausgleichsmasse 12 verdeutlichen. Insbesondere Fig. 2 zeigt, dass die Ausgleichsmasse 12 zwischen den beiden am Rahmen 8 auf der Seite der Ausgleichsmasse angreifenden Aufhängedrähten 11 hindurchragt. Der Linsenhalter 3 hingegen ragt senkrecht zur Trägerplatte 6 über die Seitenwand 9 hinaus und ist oberhalb der Seitenwand 9 und der Aufhängedrähte 11 parallel zur Trägerplatte 6 nach außen abgewinkelt. Die Fokuslinse 4 steht damit sowohl in Richtung der abzutastenden Platte 2 als auch gegenüber der Spulen- und Magnetanordnung 7 nach oben am Aktuator 1 vor und kann durch die übrigen Bauteile des Aktuators 1 bei der Positionierung über der Informationsspur nahe dem Zentrum Z der Platte 2 nicht behindert werden.

Ein alternatives Ausführungsbeispiel zu der in den Fig. 1 bis 3 gezeigten Anordnung des Aktuators 1 aus dem Rahmen 8 mit den Seitenwänden 9, 10 besteht darin, dass ein mittlerer Teil des Aktuators 1 ausschließlich aus einer parallel zu den Spulen der Spulen- und Magnetanordnung 7 angeordneten gedruckten Leiterplatte besteht, und der Linsenhalter 3 und die Ausgleichsmasse 12 an entgegengesetzten Enden dieser Leiterplatte befestigt sind. Eine solche Anordnung weist vorteilhaft eine reduzierte Masse und damit ein verringertes Trägheitsmoment auf.

## Patentansprüche

1. Aktuator (1) für eine Abtasteinrichtung zur Abtastung optischer Platten (2), mit einer in einem Linsenhalter (3) festgelegten Fokuslinse (4), mit einer mit einem Träger (6) fest verbundenen Dämpferbasis (5), und mit einer am Träger (6) angeordneten Spulen- und Magnetanordnung (7) für eine Feinpositionierung der Fokuslinse (4), wobei der Linsenhalter (3) über auf beiden Seiten der Spulen- und Magnetanordnung (7) und der Längsachse (L) des Aktuators angeordnete elastisch biegsame Aufhängemittel (11) mit der Dämpferbasis (5) verbunden ist, **dadurch gekennzeichnet, dass** der Linsenhalter (3) im Abstand von der Längsachse (L) und dabei auf der der Längsachse (L) abgewandten und einer Aufnahme für die optischen Platten (2) zugewandten Seite des Aktuators (1) angeordnet ist.

2. Aktuator nach Anspruch 1, **dadurch gekennzeichnet, dass** der Linsenhalter (3) im seitlichen Abstand von dem im Bereich der Längsachse (L) liegenden Schwerpunkt (SP) des Aktuators (1) angeordnet ist.

3. Aktuator nach Anspruch 1 oder 2, **dadurch gekennzeichnet, dass** auf der dem Linsenhalter (3) abgewandten Seite der Längsachse (L) eine Ausgleichsmasse (12) zur Positionierung des Schwerpunktes (SP) in den Bereich der Längsachse (L) angeordnet ist.

4. Aktuator nach Anspruch 3, **dadurch gekennzeichnet, dass** der Linsenhalter (3) und die Ausgleichsmasse (12) an einem die Spulen- und Magnetanordnung (7) umschließenden Rahmen (8) angeordnet sind.

5. Aktuator nach Anspruch 4, **dadurch gekennzeichnet, dass** der Linsenhalter (3), die Ausgleichsmasse (12) und der Rahmen (8) zusammen in einem Stück ausgebildet sind.

6. Aktuator nach Anspruch 4 oder 5, **dadurch gekennzeichnet, dass** der Rahmen (8) mit den Aufhängemitteln (11) für den Linsenhalter (3) verbunden ist.

7. Aktuator nach einem der vorhergehenden Ansprüche, **dadurch gekennzeichnet, dass** der Aktuator (1) mit einem optischen Gehäuse eine Abtasteinrichtung bildet, die quer zu dessen Längsachse (L) bewegt wird.

8. Gerät zum Lesen und/oder Beschreiben optischer Speichermedien, **dadurch gekennzeichnet, dass** es einen Aktuator nach einem der vorhergehenden Ansprüche und eine mit diesem gebildete Abtasteinrichtung aufweist.
